Europäisches Patentamt

(19) European Patent Office

Office européen des brevets

(11) Numéro de publication: **0 100 712**
**B1**

(12) **FASCICULE DE BREVET EUROPEEN**

(45) Date de publication du fascicule du brevet:
**11.03.87**

(21) Numéro de dépôt: **83401493.8**

(22) Date de dépôt: **20.07.83**

(51) Int. Cl.⁴: **G 06 F 13/28**

(54) **Système de détection de codes d'arrêt programmables dans un transfert de données intervenant entre une mémoire locale d'un microprocesseur et un périphérique, dans un ensemble processeur utilisant un circuit d'accès direct à la mémoire locale.**

(30) Priorité: **27.07.82 FR 8213084**

(43) Date de publication de la demande:
**15.02.84 Bulletin 84/7**

(45) Mention de la délivrance du brevet:
**11.03.87 Bulletin 87/11**

(84) Etats contractants désignés:
**CH DE GB IT LI NL SE**

(56) Documents cités:
**PATENTS ABSTRACTS OF JAPAN, vol. 6, no. 175 (P-141)[1053], 9 septembre 1982**
**PROCEEDINGS OF THE CONFERENCE ON MICROPROCESSORS IN AUTOMATION AND COMMUNICATIONS, 19-22 septembre 1978, University of Kent, IERE CONFERENCE PROCEEDINGS, no. 41, pages 395-402, Londres, GB. G. BUREN et al.: "A microprocessor system managing the IEC-bus"**
**IEEE TRANSACTIONS ON NUCLEAR SCIENCE, vol. NS-20, no. 2, avril 1973, pages 42-49, New York, USA. F. A. KIRSTEN: "Some characteristics of interfaces between camac and small computers"**
**WIRELESS WORLD, vol. 88, no. 1553, février 1982, pages 60-62, Olchester, GB. D. ZISSOS et al.: "Designing with microprocessors - Hardware for direct memory access systems"**

(73) Titulaire: **Debesson, Pierre, 8, Avenue Jean Jaurès, F-92140 Clamart (FR)**

(72) Inventeur: **Debesson, Pierre, 8, Avenue Jean Jaurès, F-92140 Clamart (FR)**

(74) Mandataire: **Mongrédien, André et al, c/o BREVATOME 25, rue de Ponthieu, F-75008 Paris (FR)**

(56) Documents cités: (suite)
**IBM TECHNICAL DISCLOSURE BULLETIN, vol. 9, no. 10, mars 1967, page 1333, New York, USA. R. J. FLAHERTY et al.: "Memory block transfer"**

## Description

La présente invention concerne un dispositif de détection de codes d'arrêt programmables dans un transfert de données intervenant entre une mémoire d'un microprocesseur et un périphériques dans un ensemble processeur utilisant un circuit d'accès direct à la mémoire.

Cette invention s'applique à la gestion des échanges de données dans un ensemble processeur comprenant un microprocesseur, des périphériques et un circuit d'accès direct à la mémoire du microprocesseur.

On sait que les circuits d'accès direct à la mémoire d'un microprocesseur sont maintenant très utilisés dans les ensembles processeurs. Les circuits sont connus par les initiales DMA. Ils permettent de gérer plus simplement les échanges de données entre la mémoire d'un microprocesseur et des périphériques; ils permettent aussi d'accroître la rapidité des échanges de données. Une utilisation d'un circuit DMA permettant la programmation d'un code d'arrêt est décrite dans la revue IERE conference proceedings, N° 41, pages 395 à 402 dans un article intitulé «Proceedings of the conference on microprocessors in automation and communication», 19 à 22 septembre 1978.

On sait aussi qu'en transmission de données, il est toujours possible de prévoir le nombre de caractères devant être émis. Un problème apparaît à la réception de ces données, où trois types de solutions peuvent être envisagés:

— ne pas gérer la réception à l'aide d'un circuit d'accès direct DMA;

— superviser la réception par une temporisation;

— introduire un système de détection de code arrêt, ce système étant soit unique, soit non programmable.

Ces différentes solutions présentent des inconvénients majeurs:

— dans le cas où la réception n'est pas gérée par un circuit d'accès direct DMA mais par le microprocesseur, les vitesses d'échanges ou de transferts de données ne sont pas très grandes, surtout si le microprocesseur doit gérer simultanément plusieurs lignes de transfert,

— lorsque la réception est supervisée par une temporisation, cette temporisation dépend de la vitesse de la ligne asynchrone et doit être modifiable. Cette solution n'est utilisable de façon valable que lorsque le transfert de données s'effectue dans un mode «bloc». Dans ce cas, la détection de la fin d'un échange ou transfert intervient beaucoup plus tard que la fin réelle de cet échange. A titre d'exemple, à une vitesse de transmission de 300 bauds, le transfert d'un caractère a une durée de 33 ms. On règle alors la temporisation de façon à détecter le fait qu'aucun caractère n'a été reçu pendant plus de 40 ms par exemple. Le retard entre la détection et la fin effective d'un échange est donc de 40 ms,

— la solution qui consiste à utiliser un système de détection de code d'arrêt, soit unique, soit non programmable, n'est pas elle non plus très satisfaisante: lorsqu'il est nécessaire de détecter un code d'arrêt, le plus simple est d'effectuer la détection d'un caractère unique, fixé une fois pour toutes. Malheureusement, un seul caractère d'arrêt n'est jamais suffisant et il est souvent nécessaire d'avoir la possibilité de modifier ce caractère. Généralement, dans les systèmes connus, la détection d'un code d'arrêt programmable se fait par l'intermédiaire d'un régistre et d'un comparateur. Si l'on désire alors disposer de plusieurs codes d'arrêt différents, pour un même échange de données (et c'est souvent le cas), on est conduit à augmenter le nombre de registres et à alourdir le matériel permettant la programmation de ces registres et la détection de la fin d'un échange. Cela est très onéreux. En effet, grâce à ces systèmes connus utilisant un registre et un comparateur pour chaque code d'arrêt, il est nécessaire, lorsqu'on désire détecter n codes d'arrêt simultanés, d'utiliser n registres de mémorisation du code d'arrêt, présentant n adresses différentes et nécessitant donc n décodages d'adresses différents; il est également nécessaire d'utiliser n comparateurs comparant le contenu des registres avec les données présentes sur le bus. Il est aussi possible de n'utiliser qu'un seul comparateur pour effectuer la comparaison avec le contenu des n registres, mais, dans ce cas, il faut présenter successivement sur l'une des entrées du comparateur, le contenu des n registres. Il en résulte que, dans ce cas, n signaux non jointifs d'un spectre doivent être fournis pour valider la sortie des n registres. Ces signaux peuvent être élaborés à partir d'une ou plusieurs lignes à retard ou d'un registre à décalage, piloté à une fréquence déterminée. Cette solution, bien que diminuant le nombre des comparateurs nécessaires, complique considérablement la logique de contrôle du système. Ce type de système est décrit dans la demande de brevet japonais JP-A-5 790 745.

La présente invention a pour but de remédier à ces inconvénients et notamment, de réaliser un dispositif de détection de codes d'arrêt programmables, dans un transfert de données intervenant entre la mémoire d'un microprocesseur et l'un des périphériques, dans un ensemble processeur comprenant un circuit d'accès direct à la mémoire. Ce dispositif permet d'éviter toute temporisation à la réception d'un échange et d'éviter aussi, une multiplication inutile du nombre de registres et de comparateurs, lorsque l'on désire détecter plusieurs codes d'arrêt.

L'invention a pour objet un dispositif de détection de codes d'arrêt programmables dans un échange de données effectué entre la mémoire locale d'un microprocesseur et un périphérique dans un ensemble processeur utilisant un circuit d'accès direct à la mémoire locale, ce circuit partageant l'accès à un bus commun permettant des échanges de données entre des périphériques et la mémoire locale, ce circuit d'accès direct comprenant plusieurs canaux d'échanges de données avec les périphériques, caractérisé en ce qu'il comprend une mémoire à accès aléatoire recevant ces données provenant du microprocesseur

(MP$_1$) sur des entrées d'adressage (AD$_0$, . . ., AD$_7$), le microprocesseur fournissant en outre, pour inscrire, un élément binaire spécifique d'adressage appliqué sur une entrée de données de la mémoire à accès aléatoire, cet élément binaire spécifique d'adressage prenant une valeur spécifique 0 ou 1 pour enregistrer dans la mémoire que les données appliquées sur les entrées d'adressage représentent un code d'arrêt, un circuit de commande présentant des sorties qui sont respectivement reliées à des entrées de validation et de commande d'écriture de la mémoire à accès aléatoire, ce circuit de commande recevant respectivement sur des entrées, des signaux qui proviennent du microprocesseur ou du circuit d'arbitrage et qui sont respectivement relatifs aux opérations d'entrée-sortie en écriture ou en lecture du périphérique et un circuit de test relié à une sortie de lecture de la mémoire à accès aléatoire, pour tester, au cours d'un échange de données, la valeur binaire enregistrée à l'adresse courante de la mémoire à accès aléatoire, déterminée par les signaux de données, ce test étant commandé par un signal de commande appliqué au circuit de test et à ladite périphérique par le circuit d'accès direct à la mémoire locale du microprocesseur.

Selon une autre caractéristique de l'invention, le circuit de commande comprend une porte de type «ET» recevant du microprocesseur ou du circuit de demande d'accès les signaux relatifs aux opérations d'entrée-sortie et commandant l'écriture ou la lecture du périphérique, une sortie de cette porte «ET» étant reliée à l'entrée de commande de validation de la mémoire à accès aléatoire, et une porte de type «OU» recevant du microprocesseur sur une entrée, le signal de décodage de poids d'adresses de la mémoire, une autre entrée de cette porte du type «OU» étant reliée à la sortie de la porte «ET», une sortie de la porte «OU» étant reliée à l'entrée de commande d'écriture de la mémoire à accès aléatoire.

Selon une autre caractéristique, le circuit de test comprend une porte de type «OU» recevant sur une entrée le signal de commande de test provenant du circuit de demande d'accès, et sur une autre entrée, un signal de sortie de la mémoire à accès aléatoire indiquant qu'un code d'arrêt a été détecté dans les données alors transférées, et une bascule de type R/S dont une entrée est reliée à une sortie de la porte «OU» du circuit de test et dont une autre entrée est reliée à la sortie de la porte «OU» du circuit de commande pour recevoir un signal de remise à zéro de cette bascule, la sortie de cette bascule étant reliée à une entrée de commande du circuit de demande d'accès et à une entrée de commande du microprocesseur pour leur fournir un signal relatif à la détection éventuelle d'un code d'arrêt, provoquant l'interruption de l'échange et l'interruption du microprocesseur correspondant.

Les avantages de l'invention ressortiront mieux de la description qui va suivre, donnée en référence aux dessins annexés dans lesquels:

– la figure 1 représente schématiquement un ensemble processeur dans lequel intervient un circuit de demande d'accès à la mémoire d'un microprocesseur, ainsi que pour chacun des canaux de ce circuit de demande d'accès, un système de détection conforme à l'invention,

– la figure 2 représente schématiquement le système de détection de codes d'arrêt programmables, conforme à l'invention,

Les figures suivantes sont des chronogrammes qui permettent de mieux comprendre le fonctionnement du système conforme à l'invention:

– la figure 3 représente en a et b des chronogrammes qui correspondent respectivement aux signaux essentiels reçus ou émis par un microprocesseur de l'ensemble pour effectuer des opérations de lecture ou d'écriture dans une ressource périphérique,

– la figure 4 est un chronogramme qui représente schématiquement les principaux signaux échangés d'une part entre un microprocesseur et le circuit de demande d'accès qui lui est associé, et d'autre part, entre ce circuit et un périphérique intervenant sur l'un des canaux de ce circuit de demande d'accès,

– la figure 5 est un chronogramme qui représente schématiquement les principaux signaux parvenant sur les entrées du système de l'invention, pour la programmation d'un code d'arrêt dans la mémoire à accès aléatoire de ce système,

– la figure 6 est un chronogramme qui représente schématiquement les principaux signaux d'entrée et de sortie du système de l'invention, dans le cas de la détection d'un code arrêt au cours d'un transfert de données d'une ressource périphérique vers la mémoire locale d'un microprocesseur de l'ensemble,

– la figure 7 est un chronogramme qui représente les principaux signaux d'entrée et de sortie du système de l'invention, dans le cas d'un transfert de données effectué entre la mémoire locale du microprocesseur de l'ensemble et un périphérique.

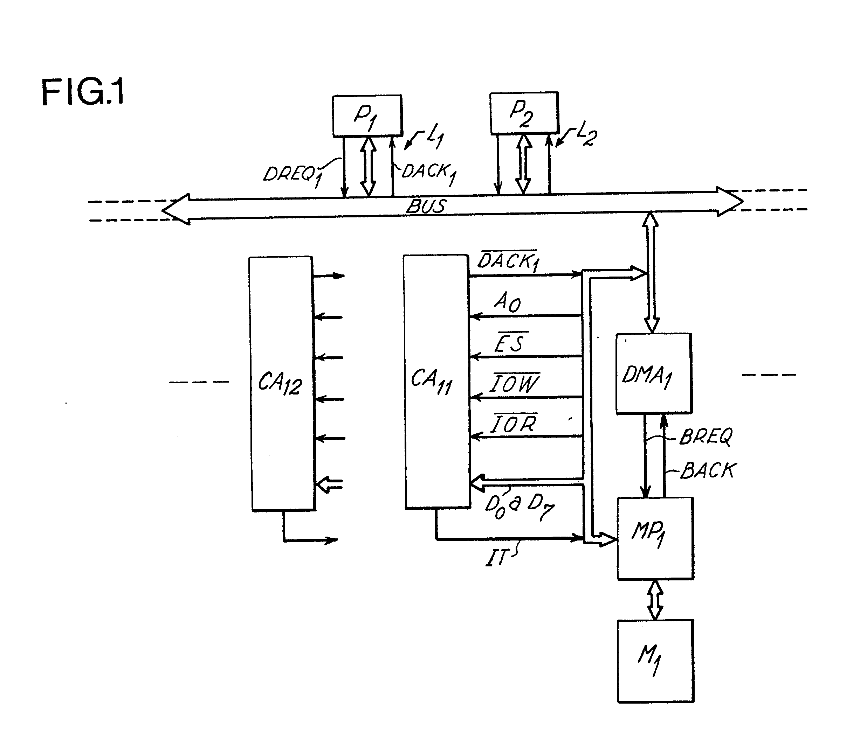

La figure 1 représente schématiquement un ensemble processeur dans lequel un microprocesseur MP$_1$ ainsi que sa mémoire associée M$_1$ communiquent avec des ressources périphériques P$_1$, P$_2$, . . . par l'intermédiaire d'un bus commun BUS et par l'intermédiaire d'un circuit DMA$_1$ de demande d'accès direct à la mémoire; ces demandes d'accès interviennent lorsque des échanges ou des transferts de données doivent être effectués dans l'ensemble processeur.

Dans l'ensemble représenté en exemple sur cette figure, on suppose qu'au microprocesseur MP$_1$ correspond un seul circuit d'arbitrage DMA1. Des systèmes conformes au système de l'invention sont représentés en CA$_{11}$, CA$_{12}$. Comme on le verra plus loin en détail, chaque circuit de demande d'accès direct à la mémoire est de type 8237, commercialisé par la Société INTEL par exemple. Ce circuit présente plusieurs canaux de liaison L$_1$, L$_2$, . . . qui sont reliés respectivement aux périphériques tels que P$_1$, P$_2$, . . . à travers le bus BUS. Ces canaux ne sont pas représentés en détail sur cette figure, mais il est bien évident que si quatre périphériques par exemple, sont reliés

au microprocesseur $MP_1$, par l'intermédiaire du bus et du circuit d'arbitrage $DMA_1$, il y a quatre canaux de liaison tels que $L_1$ qui relient ces quatre ressources périphériques avec ce circuit de demande d'accès.

Les différents signaux mentionnés sur cette figure seront décrite plus loin en détail; leur signification est la suivante:

– $DREQ_1$ est un signal indiquant que la ressource $P_1$ effectue une demande d'accès au bus, par exemple pour transférer des données vers le microprocesseur MP1 ou vers sa mémoire $M_1$. Cette demande parvient par l'intermédiaire du bus, au circuit de demande d'accès $DMA_1$.

– le signal $\overline{DACK_1}$ est un signal fourni par le circuit $DMA_1$, appliqué au périphérique $P_1$, par l'intermédiaire du bus, pour indiquer à cette ressource que sa demande d'accès est acceptée. Ce signal est d'ailleurs également transmis au système $CA_{11}$ de détection de codes d'arrêt, pour des raisons que l'on expliquera plus loin en détail.

– le signal BREQ transmis par le circuit de demande d'accès $DMA_1$ au processeur $MP_1$ indique une demande d'accès au bus transmise par ce circuit au bus.

– le signal BACK fourni par le microprocesseur $MP_1$ au circuit de demande d'accès $DMA_1$, indique que cette demande d'accès au bus est acceptée par le microprocesseur $MP_1$.

– les signaux $D_0$ à $D_7$ représentent les données émises par le microprocesseur en direction de l'un des périphériques, ou émises par l'un de ces périphériques, en direction du microprocesseur. Ces données sont d'ailleurs appliquées, pour des raisons que l'on expliquera plus loin en détail, au système de détection $CA_{11}$, dans l'exemple considéré.

– les signaux $\overline{IOR}$ et $\overline{IOW}$ sont des signaux fournis par le microprocesseur $MP_1$ ou par le circuit $DMA_1$, dans l'exemple considéré; ces signaux sont représentatifs d'opérations entrée/sortie d'écriture ou de lecture d'un périphérique et sont appliqués à une mémoire à accès aléatoire comprise dans le système de détection.

– le signal $\overline{ES}$ est un signal résultant d'un décodage d'adresses effectué pour programmer, comme on le verra plus loin en détail, un code de référence dans la mémoire à accès aléatoire comprise dans le système de l'invention.

– le signal IT est un signal d'interruption qui est appliqué au microprocesseur $MP_1$ et éventuellement au circuit de demande d'accès $DMA_1$, lorsqu'un code d'arrêt est détecté dans les données $D_0$ à $D_7$ provenant de la mémoire locale $M_1$ associée au microprocesseur $MP_1$ ou de la ressource $P_1$, lors d'un transfert sur le canal correspondant du circuit de demande d'accès.

– le signal $A_0$ est un signal d'adressage de la mémoire à accès aléatoire du système.

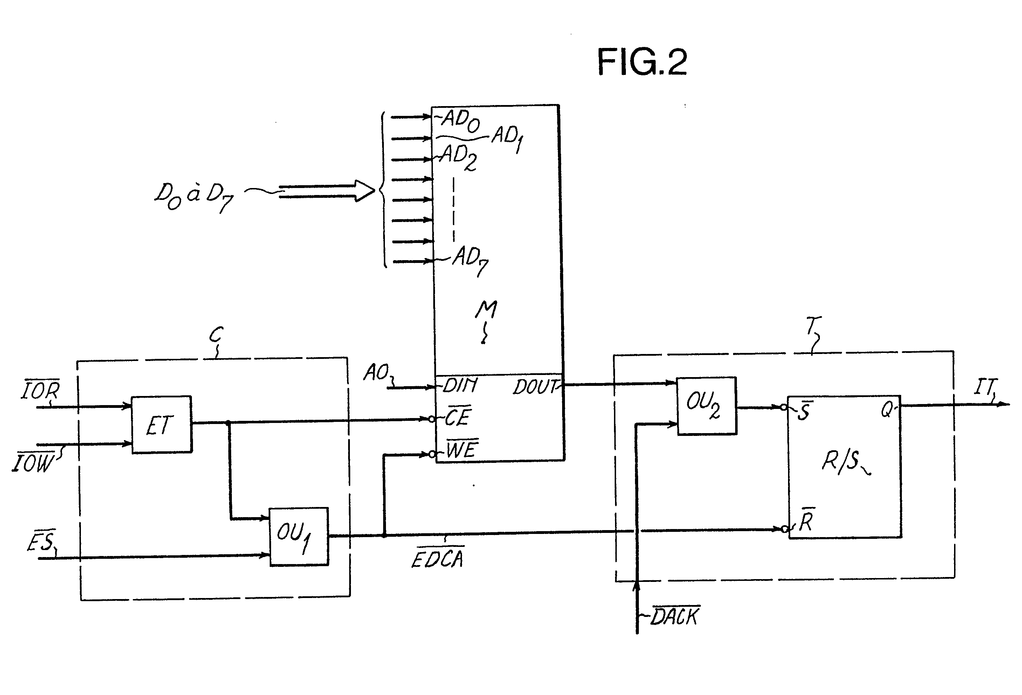

La figure 2 représente schématiquement un système de détection de codes d'arrêt programmables, conforme à l'invention. Ce système est par exemple celui qui est représenté en $CA_{11}$ sur la figure 1. Il comprend une mémoire M à accès aléatoire de type MM 5257J-3 commercialisé par la Société Nationale Semiconductor par exemple. Cette mémoire comporte, par exemple, huit entrées d'adressage $AD_0$, ... $AD_7$ qui, pour des raisons qui seront données plus loin en détail, reçoivent les données $D_0$ à $D_7$ du système, les autres entrées d'adressage de cette mémoire n'étant pas utilisées. Cette mémoire comporte également, de façon connue, une entrée DIN de données, qui, dans le système de l'invention, reçoit un élément binaire d'adresses AO. Le système comprend également un circuit de commande C dont les sorties sont respectivement reliées aux entrées de validation $\overline{CE}$, et de commande d'écriture $\overline{WE}$, de la mémoire. Ce circuit reçoit respectivement sur des entrées, les signaux $\overline{IOR}$, $\overline{IOW}$, $\overline{ES}$ qui proviennent du microprocesseur ou du circuit ($DMA_1$) de demande d'accès à la mémoire locale $M_1$; ces signaux sont respectivement relatifs aux opérations entrée/sortie pour l'écriture ou la lecture d'un périphérique, ainsi qu'au décodage d'adresses. Le système comprend aussi un circuit de test T, relié à une sortie (DOUT) de la mémoire M; ce circuit permet de tester, au cours d'un échange de données entre une ressource périphérique et la mémoire locale $M_1$ du microprocesseur, la valeur d'un élément binaire éventuellement présent dans les données, et qui serait représentatif d'un code d'arrêt qui aurait été également chargé, à l'initialisation du système, dans la mémoire M. Le test est commandé par un signal de commande $\overline{DACK}$ qui indique l'état du canal correspondant au périphérique auquel le système de détection du code d'arrêt est associé.

Le circuit de commande C comprend une porte de type ET qui reçoit du microprocesseur ou du circuit de demande d'accès les signaux $\overline{IOW}$ et $\overline{IOR}$ relatifs aux opérations d'entrée/sortie pour l'écriture ou la lecture d'un périphérique. Une sortie de cette ET est reliée à l'entrée de commande de validation CE de la mémoire M; ce circuit de commande comprend aussi une porte $OU_1$ de type OU, recevant, sur une entrée, le signal $\overline{ES}$ de décodage d'adresses. Une autre entrée de cette porte $OU_1$ est reliée à la sortie de la porte ET. Enfin, la sortie de cette porte $OU_1$ est reliée à l'entrée $\overline{WE}$ de commande d'écriture de la mémoire M.

Le circuit de test T comprend une porte $OU_2$ du type OU, qui reçoit sur une entrée le signal de commande du test $\overline{DACK}$ provenant du circuit de demande d'accès et indiquant l'état du canal correspondant; cette porte $OU_2$ reçoit sur une autre entrée le signal DOUT de sortie de la mémoire M.

Enfin, le circuit de test T comprend aussi une bascule de type R/S dont une entrée $\overline{S}$ est reliée à la sortie de la porte $OU_2$ et dont une autre entrée $\overline{R}$ est reliée à la sortie de la porte $OU_1$ du circuit de commande C. La sortie Q de la bascule R/S est reliée, comme on l'a indiqué plus haut, éventuellement à une entrée de commande du circuit de demande d'accès et à une entrée de commande du microprocesseur. Cette sortie Q fournit un signal IT relatif à la détection éventuelle d'un code d'arrêt dans des données échangées. Ce signal provoque l'interruption des traitements effectués par le microprocesseur, et l'arrêt du circuit d'arbitrage.

Le système qui vient d'être décrit fonctionne de la manière suivante, pour la programmation ou enregistrement d'un code d'arrêt de référence dans la mémoire M: pour être écrite, la mémoire M doit recevoir sur ses entrées $\overline{CE}$ et $\overline{WE}$ des signaux actifs (niveau logique bas).

Lorsque l'on souhaite écrire un code d'arrêt de référence à une adresse prédéterminée de la mémoire M, on suppose par convention que l'on inscrit un élément binaire 0 à cette adresse prédéterminée. Cette inscription s'effectue de la manière suivante: on suppose que le microprocesseur fournit une adresse $A_0$, une donnée XX parmi les données $D_0, \ldots D_7$ appliquées par le microprocesseur sur les entrées d'adressage $AD_0$, $AD_7$ de la mémoire M. Si l'élément binaire d'adressage $A_0$ est égal à 0, pour la mémoire M, l'application de ces différents signaux correspond à l'écriture de l'élément binaire 0 à l'adresse «XX». Un code d'arrêt est alors présent à cette adresse. Le signal $\overline{ES}$ résulte d'un décodage des autres éléments binaires d'adressage; l'élément binaire $A_0$ n'est pas utilisé dans ce décodage. Cet élément binaire est appliquée sur l'entrée de donnée DIN de la mémoire.

Au contraire, si l'on souhaite indiquer l'absence de code d'arrêt de référence à une adresse prédéterminée de la mémoire M, on inscrit un élément binaire de valeur 1 à cette adresse prédéterminée. Comme dans le cas précédent, le microprocesseur fournit un élément binaire d'adressage $A_0$ d'une donnée YY parmi les données $D_0, \ldots D_7$ appliquées sur les entrées d'adressage $AD_0, \ldots AD_7$ de la mémoire M. Si l'élément binaire $A_0$ est égal à 1, cela signifie pour la mémoire M qu'un code d'arrêt est absent à l'adresse YY. Comme dans le cas précédent, le signal $\overline{ES}$ appliqué sur l'entrée de la porte $OU_1$ pour commander l'écriture dans la mémoire M, résulte du décodage des autres signaux d'adressage; l'élément binaire $A_0$ n'est pas traité dans ce décodage. Il est appliqué sur l'entrée de donnée DIN de la mémoire.

Pour détecter un code d'arrêt dans les données $D_0, \ldots D_7$ présentes sur les entrées $AD_0$, $AD_7$ de la mémoire M, lors d'un échange de données entre une mémoire locale d'un microprocesseur et un périphérique à travers le circuit de demande d'accès direct à la mémoire, le système réagit de la manière suivante: lorsqu'une donnée XX parmi les données $D_0, \ldots D_7$ est un code d'arrêt, le signal de sortie DOUT de la mémoire est au niveau logique 0. Si simultanément le signal $\overline{DACK}$, fourni par le circuit de demande d'accès, est actif, (niveau logique bas) il apparaît en sortie de la bascule R/S un signal IT de niveau logique 1 indiquant la détection d'un code d'arrêt.

La mémoire M peut être par exemple une mémoire à accès aléatoire, comportant 256 registres de 1 élément binaire.

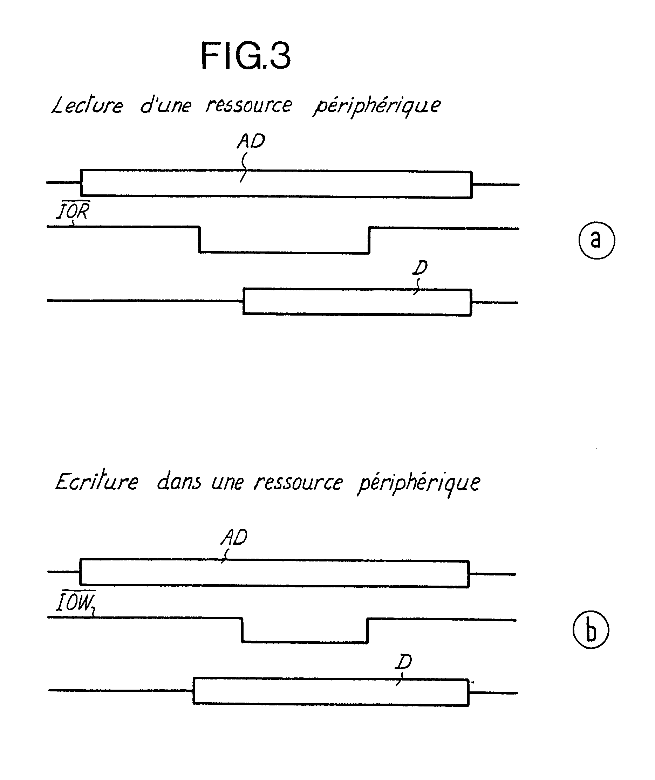

La figure 3 représente en a et b des chronogrammes qui correspondent respectivement aux signaux essentiels reçus ou émis par un microprocesseur pour échanger des données avec une ressource périphérique.

Le chronogramme a représente les principaux signaux qui interviennent lors d'une opération de lecture d'un périphérique. Le microprocesseur émet vers le périphérique des signaux d'adresse schématisés en AD sur la figure; il émet ensuite un signal $\overline{IOR}$ de commande d'opérations d'entrée-sortie, et plus particulièrement de lecture de ce périphérique. Ensuite, les données D peuvent être transférées vers le microprocesseur.

Le chronogramme b de cette figure représente schématiquement les signaux essentiels qui interviennent dans une opération d'écriture de données dans un périphérique. Le microprocesseur émet tout d'abord des signaux d'adresses AD en direction de la ressource concernée. Il émet ensuite un signal $\overline{IOR}$ de commande d'opération d'entrée/sortie et plus particulièrement d'écriture, en direction de cette ressource périphérique. Enfin, le microprocesseur transfère les données D en direction de cette ressource.

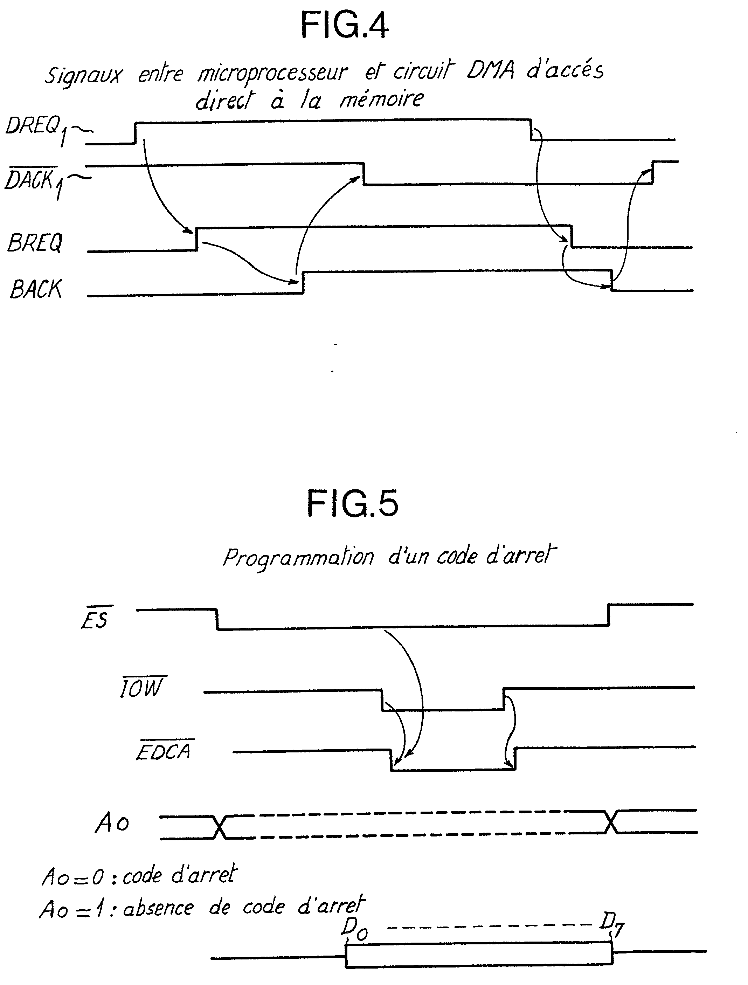

La figure 4 est un chronogramme qui représente schématiquement les principaux signaux échangés entre un microprocesseur et le circuit de demande d'accès direct à la mémoire, ainsi que les principaux signaux échangés entre ce circuit et une ressource périphérique intervenant sur l'un des canaux de ce circuit de demande d'accès direct à la mémoire.

Lorsque l'une des ressources, telle que le périphérique $P_1$ par exemple (figure 1) désire échanger des données avec le microprocesseur $MP_1$ ou avec le mémoire qui lui est associée, elle émet tout d'abord un signal $DREQ_1$ de demande de transfert qui est fourni au circuit de demande d'accès ($DMA_1$). Ce circuit de demande d'accès direct à la mémoire fournit alors au microprocesseur $MP_1$ un signal BREQ indiquant que le circuit de demande d'accès a reçu une demande de transfert et désire utiliser le bus. Une fois le cycle en cours terminé, le microprocesseur émet alors un signal BACK indiquant au circuit de demande d'accès direct à la mémoire que la demande d'accès au bus est acceptée. Alors, le circuit $DMA_1$, en fonction des différentes priorités des demandes de transfert qu'il reçoit, émet le signal $\overline{DACK_1}$ qui est appliqué au périphérique $P_1$; ce signal indique au périphérique que sa demande de transfert est acceptée. C'est la descente du signal $\overline{DACK_1}$ qui permet de déclencher le transfert de données du périphérique $P_1$ vers la mémoire associée au microprocesseur $MP_1$.

La figure 5 est un chronogramme qui représente schématiquement les principaux signaux qui parviennent sur les entrées du système de l'invention, pour l'enregistrement ou la programmation d'un code d'arrêt de référence, dans la mémoire à accès aléatoire M. Sur ce chronogramme, le signal $\overline{ES}$ est un signal qui est fourni par le microprocesseur ou le circuit de demande d'accès et qui est appliqué sur l'entrée de la porte $OU_1$ du circuit de commande C. Ce signal résulte du décodage des adresses $A_1, \ldots A_7$ fournies par le microprocesseur ou par le circuit de demande d'accès, à l'exception de l'adresse $A_0$. Après ce décodage, le microprocesseur fournit le signal $\overline{IOW}$ de commande d'opération d'entrée-sortie, et précisément d'écriture; ce signal est appliqué à l'entrée de la porte ET du circuit de commande C. Il en résulte que le signal de sortie $\overline{EDCA}$ de la porte $\overline{OU}_1$ du circuit de commande devient actif et passe donc au niveau bas. Ce signal est appliqué à l'entrée d'écriture $\overline{WE}$ de la mémoire M. Alors, si les signaux de données $D_0$ à $D_7$ sont appliqués sur les entrées d'adressage $AD_0$, ... $AD_7$ de la mémoire, et si le signal binaire d'adressage $A_0$ est appliqué sur l'entrée de données DIN de la mémoire M, ce signal binaire est enregistré à l'adresse désirée de la mémoire M. Lorsque le niveau logique de ce signal $A_0$ est 0 ($A_0 = 0$), cela signifie qu'à l'adresse déterminée par les signaux de données $D_0$ à $D_7$, un code d'arrêt est enregistrée; au contraire, si le niveau logique de ce signal $A_0$ est haut ($A_0 = 1$), cela signifie qu'il n'y a pas de code d'arrêt à l'adresse correspondante. Après l'inscription du code d'arrêt dans la mémoire M, les signaux $\overline{IOW}$, $\overline{EDCA}$ et $\overline{ES}$ redeviennent inactifs et passent donc au niveau logique 1.

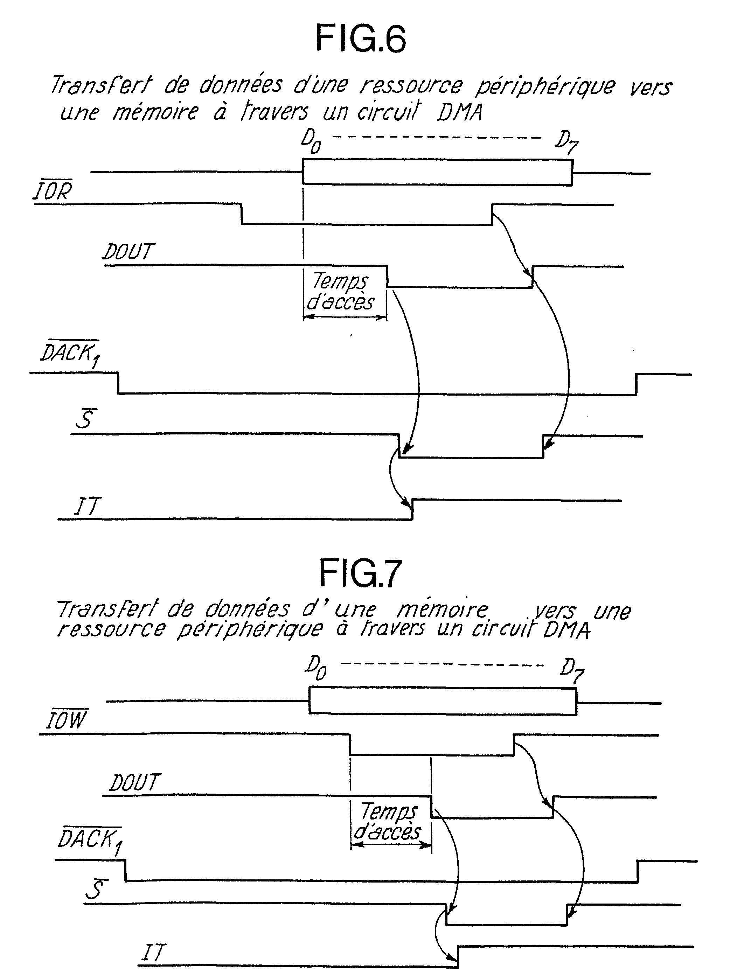

La figure 6 est un chronogramme des principaux signaux d'entrées et de sorties du système de l'invention, dans le cas de la détection d'un code d'arrêt, au cours d'un transfert de données entre un périphérique tel que $P_1$ (figure 1) et la mémoire locale $M_1$ du microprocesseur $MP_1$ à travers un canal du circuit de demande d'accès. Les données à transférer sont représentées en $D_0$, ... $D_7$ sur ce chronogramme. Pour effectuer ce transfert, le microprocesseur émet tout d'abord un signal de commande d'opération d'entrée-sortie de lecture $\overline{IOR}$; ce signal commande, d'une part la lecture du périphérique $P_1$, et il est appliqué, d'autre part, à l'une des entrées de la porte ET du circuit de commande C du système de détection de l'invention validant la mémoire M à accès aléatoire. Avec un certain retard qui dépend du temps d'accès de la mémoire à accès aléatoire M, et si un code d'arrêt est présent à l'adresse déterminée par les données $D_0$ à $D_7$ reçues dans la mémoire à accès aléatoire M, le signal de sortie DOUT de la mémoire M passe à un niveau logique bas. Lorsque le transfert en cours concerne le canal 1 du circuit ($DMA_1$) de demande d'accès direct à la mémoire locale $M_1$, celui-ci fournit le signal $\overline{DACK}_1$ d'acceptation de transfert de données qui est appliqué à la porte $OU_2$ du circuit de test T, le signal de sortie de cette porte $OU_2$, appliqué à l'entrée $\overline{S}$ de la bascule R/S devient actif (passe au niveau logique bas); alors, le signal $\overline{EDCA}$ appliqué à l'entrée R de la bascule R/S étant à un niveau logique 1, le signal de sortie IT de la bascule R/S passe au niveau logique 1. Ce signal est appliqué au microprocesseur $MP_1$ et éventuellement au circuit de demande d'accès $DMA_1$, pour provoquer, soit une interruption du microprocesseur, soit un arrêt du transfert de données par l'intermédiaire du circuit ($DMA_1$) de demande d'accès direct à la mémoire $M_1$. Toute nouvelle programmation d'un code d'arrêt dans la mémoire M nécessite de rendre actif le signal

$\overline{EDCA}$ de sortie de la porte $OU_1$; ce signal qui est alors à un niveau logique bas, provoque la remise à zéro (niveau logique bas), du signal de sortie IT de la bascule R/S.

La figure 7 est un chronogramme des principaux signaux d'entrée et de sortie du système de l'invention, dans le cas d'un transfert de données effectué entre la mémoire locale $M_1$ du microprocesseur $MP_1$ par exemple, et le périphérique $P_1$ à travers un canal du circuit de demande d'accès. Les données $D_0$ à $D_7$ transférées de la mémoire au périphérique $P_1$, sont appliquées sur les entrées d'adresses $AD_0$, ... $AD_7$ de la mémoire M du système de détection. Le circuit de demande d'accès $DMA_1$ fournit également un signal de commande d'opérations d'entrée-sortie d'écriture $\overline{IOW}$, à la mémoire M du système de détection; après un certain temps d'accès, et si un code d'arrêt est présent à l'adresse déterminée par les données $D_0$ à $D_7$ reçues dans la mémoire à accès aléatoire M, le signal de sortie DOUT de la mémoire M devient actif (passe à un niveau logique bas). Si le transfert en cours concerne le canal $L_1$ du circuit $DMA_1$ de demande d'accès direct à la mémoire, celui-ci fournit alors le signal $\overline{DACK}_1$ (niveau logique bas). Les signaux DOUT et $\overline{DACK}_1$ sont appliqués sur les entrées de la porte $OU_2$ du circuit de test T; s'ils sont tous deux à un niveau logique bas, il en résulte l'application d'un signal de niveau logique bas sur l'entrée $\overline{S}$ de la bascule R/S. Alors, le signal IT sur la sortie Q de la bascule R/S passe au niveau logique 1, indiquant ainsi qu'un code d'arrêt est présent dans les données transférées; ce code d'arrêt correspond à un code de référence enregistré dans la mémoire M. Le signal IT de niveau logique haut (niveau 1) est appliqué, comme dans l'exemple précédent, au microprocesseur et éventuellement, au circuit de demande d'accès correspondants pour provoquer soit une interruption du traitement effectué par ce microprocesseur, soit un arrêt du transfert de données.

Comme dans les autres exemples de fonctionnement qui viennent d'être décrits, le signal $\overline{WE}$ est inactif (niveau logique 1). Les états des signaux $\overline{ES}$ et $A_0$ appliqués respectivement sur l'entrée DIN de la mémoire M et sur l'entrée de la porte $OU_1$ du circuit de commande C sont sans importance dans ce cas, la mémoire M à accès aléatoire étant seulement lue.

Dans l'exemple de réalisation du système de l'invention, la mémoire M qui est constituée par 256 registres de l'élément binaire permet la programmation de 256 codes d'arrêt de référence.

**Revendications**

1. Dispositif ($CA_{11}$) de détection de codes d'arrêt programmables dans un échange de données ($D_0$, ... $D_7$) effectué entre la mémoire locale ($M_1$) d'un microprocesseur ($MP_1$) et un périphérique ($P_1$ ou $P_2$) dans un ensemble processeur utilisant un circuit ($DMA_1$) d'accès direct à la mémoire locale ($M_1$), ce circuit partageant l'accès à un bus commun (BUS) permettant des échanges de données

entre des périphériques (P$_1$, P$_2$) et la mémoire locale (M$_1$), ce circuit (DMA$_1$) d'accès direct à la mémoire locale (M$_1$) comprenant plusieurs canaux (L$_1$, L$_2$) d'échanges de données avec les périphériques (P$_1$, P$_2$, . . .), caractérisé en ce qu'il comprend une mémoire (M) à accès aléatoire recevant les données (D$_0$, . . ., D$_7$) provenant du microprocesseur (MP$_1$) sur des entrées d'adressage (AD$_0$, . . ., AD$_7$), le microprocesseur fournissant en outre, pour inscrire, un élément binaire spécifique d'adressage (A$_0$) appliqué sur une entrée (DIN) de données de la mémoire à accès aléatoire, cet élément binaire spécifique d'adressage (A$_0$) prenant une valeur spécifique 0 ou 1 pour enregistrer dans la mémoire que les données appliquées sur les entrées d'adressage représentent un code d'arrêt, un circuit de commande (C) présentant des sorties qui sont respectivement reliées à des entrées de validation ($\overline{CE}$) et de commande d'écriture ($\overline{WE}$) de la mémoire à accès aléatoire (M), ce circuit de commande recevant respectivement sur des entrées, des signaux ($\overline{IOR}$, $\overline{IOW}$, $\overline{ES}$) qui proviennent du microprocesseur ou du circuit d'arbitrage (DMA$_1$) et qui sont respectivement relatifs aux opérations d'entrée-sortie en écriture ou en lecture du périphérique (P$_1$) et un circuit de test (T) relié à une sortie de lecture (DOUT) de la mémoire à accès aléatoire (M), pour tester, au cours d'un échange de données, la valeur binaire enregistrée à l'adresse courante de la mémoire à accès aléatoire (M), déterminée par les signaux de données (D$_0$ à D$_7$), ce test étant commandé par un signal de commande (DACK$_1$) appliqué au circuit de test (T) et à ladite périphérique (P$_1$) par le circuit d'accès direct à la mémoire (DMA$_1$) locale (M$_1$) du microprocesseur.

2. Dispositif selon la revendication 1, caractérisé en ce que le circuit de commande (C) comprend une porte de type «ET» recevant du microprocesseur (MP$_1$) ou du circuit (DMA$_1$) de demande d'accès les signaux ($\overline{IOW}$ et $\overline{IOR}$) relatifs aux opérations d'entrée-sortie et commandant l'écriture ou la lecture du périphérique (P$_1$ ou P$_2$), une sortie de cette porte «ET» étant reliée à l'entrée de commande de validation (CE) de la mémoire à accès aléatoire (M), et une porte (OU$_1$) de type «OU» recevant sur une entrée, le signal ($\overline{ES}$) de décodage des poids d'adresses une autre entrée de cette porte (OU$_1$) de type «OU» étant reliée à la sortie de la porte «ET», la sortie de la porte (OU$_1$) de type «OU» étant reliée à l'entrée ($\overline{WE}$) de commande d'écriture de la mémoire à accès aléatoire (M).

3. Dispositif selon la revendication 2, caractérisé en ce que le circuit de test (T) comprend une porte (OU$_2$) de type «OU» recevant sur une entrée le signal de commande de test ($\overline{DACK}_1$) provenant du circuit (DMA$_1$) d'accès direct à la mémoire locale (M$_1$), et sur une autre entrée un signal de sortie (DOUT) de la mémoire (M) à accès aléatoire, indiquant qu'un code d'arrêt a été détecté dans les données (D$_0$ à D$_7$) alors transférées, et une bascule de type R/S dont une entrée ($\overline{S}$) est reliée à la sortie de la porte (OU$_2$) de type «OU»

du circuit de test (T) et dont une autre entrée ($\overline{R}$) est reliée à la sortie de la porte (OU$_1$) de type «OU» du circuit de commande (C) pour recevoir un signal $\overline{EDCA}$ provoquant la remise à zéro de cette bascule, la sortie de cette bascule (R/S) étant reliée à une entrée de commande du circuit (DMA$_1$) de demande d'accès à la mémoire locale (M$_1$) et à une entrée de commande du microprocesseur pour leur fournir un signal relatif à la détection éventuelle d'un code d'arrêt, provoquant l'interruption de l'échange et l'interruption du microprocesseur (MP$_1$) correspondant.

**Claims**

1. Device (CA$_{11}$) for detecting programmable stop codes in a data exchange (D$_0$, . . ., D$_7$) carried out between a local memory (M$_1$) of a microprocessor (MP$_1$) and a peripheral (P$_1$ or P$_2$) in a processor assembly using a circuit (DMA$_1$) giving direct access to the local memory (M$_1$), this circuit sharing access to a common bus (BUS) permitting data exchanges between the peripherals (P$_1$, P$_2$) and the local memory (M$_1$), this circuit (DMA$_1$) giving direct access to the local memory (M$_1$) including several channels (L$_1$, L$_2$) for data exchanges with the peripherals (P$_1$, P$_2$, . . .), characterized in that it includes a random access memory (M) receiving the data (D$_0$, . . ., D$_7$) coming from a microprocessor (MP$_1$) on the addressing inputs (AD$_0$, . . ., AD$_7$), the micro-processor also providing, for recording, a specific addressing bit (A$_0$) applied to a data input (DIN) of the random access memory, this specific addressing bit (A$_0$) taking a specific value 0 or 1 to record in the memory that the data applied to the addressing inputs represent a stop code, a control circuit (C) having outputs which are connected to the validation ($\overline{CE}$) and write command ($\overline{WE}$) inputs of the random access memory (M) respectively, this control circuit respectively receiving on its inputs, signals ($\overline{IOR}$, $\overline{IOW}$, $\overline{ES}$) which come from the microprocessor or the arbitration circuit (DMA$_1$) and which respectively relate to the write or read input-output operations of the peripheral (P$_1$) and a test circuit (T) connected to a read output (DOUT) of the random access memory (M), in order to test, during a data exchange, the binary value recorded at the current address of the random access memory (M), determined by the data signals (D$_0$ to D$_7$), this test being controlled by a control signal (DACK$_1$) applied to the test circuit (T) and to the said peripheral (P$_1$) by the circuit (DMA$_1$) giving direct access to the local memory (M$_1$) of the microprocessor.

2. Device according to Claim 1, characterized in that the control circuit (C) includes an "AND" gate receiving from the microprocessor (MP$_1$) or from the access request circuit (DMA$_1$) the signals ($\overline{IOW}$ and $\overline{IOR}$) relating to the input-output operations and controlling the writing or reading of the peripheral (P$_1$ or P$_2$), one output of this "AND" gate being connected to the enable control input (CE) of the random access memory (M), and one "OR" gate (OU$_1$) receiving on one input the address bit

decoding signal ($\overline{ES}$), another input of this "OR" gate, ($OU_1$) being connected to the output of the "AND" gate, the output of the "OR" gate ($OU_1$) being connected to the write control input ($\overline{WE}$) of the random access memory (M).

3. Device according to Claim 2, characterized in that the test circuit (T) includes an "OR" gate ($OU_2$) receiving on one input the test command signal ($\overline{DACK_1}$) coming from the circuit ($DMA_1$) giving direct access to the local memory ($M_1$), and on another input an output signal (DOUT) from the random access memory (M) indicating that a stop code has been detected in the data $D_0$ to $D_7$) that has been transferred, and an R/S flip-flop of which one input ($\overline{S}$) is connected to the output of the "OR" gate ($OU_2$) of the test circuit (T) and of which another input ($\overline{R}$) is connected to the output of the "OR" gate ($OU_1$) of the control circuit (C) in order to receive a signal ($\overline{EDCA}$) causing this flip-flop to be reset to zero, the output of this flip-flop (R/S) being connected to a control input of the circuit ($DMA_1$) requesting access to the local memory ($M_1$) and to a control input of the microprocessor in order to provide them with a signal relating to the possible detection of a stop code, causing an interrupt of the exchange and a an interrupt of the corresponding microprocessor ($MP_1$).

**Patentansprüche**

1. Vorrichtung ($CA_{11}$) zur Erkennung von programmierbaren Stoppcoden in einer zwischen dem lokalen Speicher ($M_1$) eines Mikroprozessors ($MP_1$) und einer peripheren Einheit ($P_1$ oder $P_2$) in einer Rechenanlage durchgeführten Datenübertragung ($D_0$, . . ., $D_7$), wobei zu dem lokalen Speicher ($M_1$) eine direkte Zugriffsschaltung ($DMA_1$) verwendet wird, die am Zugriff zu einem gemeinsamen Bus (BUS) teilnimmt, der die Datenübertragung zwischen den peripheren Einheiten ($P_1$, $P_2$) und dem lokalen Speicher ($M_1$) ermöglicht, wobei die direkte Zugriffsschaltung ($DMA_1$) zu dem lokalen Speicher ($M_1$) mehrere Datenübertragungskanäle ($L_1$, $L_2$) mit den peripheren Einheiten ($P_1$, $P_2$, . . .) aufweist, dadurch gekennzeichnet, dass die Vorrichtung umfasst einen Speicher (M) mit wahlfreiem Zugriff, der die von dem Mikroprozessor ($MP_1$) herkommenden Daten ($D_0$, . . ., $D_7$) an Adresseneingängen ($AD_0$, . . ., $AD_7$) erhält, dass der Mikroprozessor ferner zum Einschreiben ein für die Adressierung spezifisches, binäres Element ($A_0$) liefert, welches an einen Dateneingang (DIN) des Speichers mit wahlweisem Zugriff gegeben wird, dass das für die Adressierung spezifische, binäre Element ($A_0$) einen spezifischen Wert 0 oder 1 annimmt, um in den Speicher einzuschreiben, dass die an den Adressierungseingängen anstehenden Daten einen Stoppcode aufweisen, einen Steuerkreis (C) mit Ausgängen, die mit Eingängen für die Gültigmachung ($\overline{CE}$) und für den Speicherbefehl ($\overline{WE}$) des Speichers (M) mit wahlfreiem Zugriff verbunden sind, wobei der Befehlskreis an

seinen Eingängen Signale ($\overline{IOR}$, $\overline{IOW}$, $\overline{ES}$) erhält, die von dem Mikroprozessor bzw. dem Beurteilungsschaltkreis ($DMA_1$) herkommen und die sich auf Eingabe-Ausgabe-Operationen beim Schreiben in die periphere Einheit ($P_1$) bzw. beim Auslesen aus dieser beziehen, und einem Prüfkreis (T), der mit einem Leseausgang (DOUT) des Speichers (M) mit wahlfreiem Zugriff verbunden ist, um während einer Datenübertragung den binären Wert zu prüfen, der bei der laufenden Adresse des Speichers (M) mit wahlfreiem Zugriff eingeschrieben ist, die durch die Datensignale ($D_0$ bis $D_7$) bestimmt ist, wobei die Prüfung durch ein Befehlssignal ($DACK_1$) gesteuert wird, welches an den Prüfkreis (T) und an die periphere Einheit ($P_1$) von der direkten Zugriffsschaltung ($DMA_1$) zu dem lokalen Speicher ($M_1$) des Mikroprozessors abgegeben wird.

2. Vorrichtung nach Anspruch 1, dadurch gekennzeichnet, dass der Steuerkreis (C) ein Tor vom Typ «UND», welches vom Mikroprozessor ($MP_1$) oder dem Zugriffsanforderungskreis ($DMA_1$) die Signale ($\overline{IOW}$ und $\overline{IOR}$) erhält, die sich auf Eingabe-Ausgabe-Operationen beziehen und das Schreiben der oder das Lesen von der peripheren Einheit ($P_1$ oder $P_2$) steuern, wobei ein Ausgang dieses UND-Tores mit dem Gültigmachungssteuereingang ($CE$) des Speichers (M) mit wahlfreiem Zugriff verbunden ist und ein Tor ($OU_1$) vom Typ «ODER» aufweist, welches an einem Ende das Decodierungssignal ($\overline{ES}$) der Adressengewichte erhält, wobei ein anderer Eingang dieses ODER-Tores ($OU_1$) mit dem Ausgang des UND-Tores verbunden ist, und dass der Ausgang des ODER-Tores ($OU_1$) mit dem Schreibbefehlseingang ($\overline{WE}$) des Speichers (M) mit wahlfreiem Zugriff verbunden ist.

3. Vorrichtung nach Anspruch 2, dadurch gekennzeichnet, dass der Prüfkreis (T) ein Tor ($OU_2$) vom Typ «ODER», welches an einem Eingang das Prüfbefehlssignal ($\overline{DACK_1}$), welches von der direkten Zugriffsschaltung ($DMA_1$) für den lokalen Speicher ($M_1$) herkommt, und an einem anderen Eingang ein Ausgangssignal (DOUT) des Speichers (M) mit wahlfreiem Zugriff erhält, welches anzeigt, dass ein Stoppcode bei den gerade übertragenen Daten $D_0$ bis $D_7$ festgestellt worden ist, und einen bistabilen Multivibrator vom Typ R/S aufweist, dessen einer Eingang ($\overline{S}$) mit dem Ausgang des ODER-Tores ($OU_2$) des Prüfkreises (T) und dessen anderer Eingang ($\overline{R}$) mit dem Ausgang des ODER-Tores ($OU_1$) des Steuerkreises (C) verbunden ist, um ein Signal ($\overline{EDCA}$) zu erhalten, welches diesen bistabilen Multivibrator auf Null zurücksetzt, und dass der Ausgang dieses bistabilen Multivibrators (R/S) mit einem Eingang des Steuerkreises ($DMA_1$) für die Zugriffsnachfrage für den lokalen Speicher ($M_1$) und mit einem Befehlseingang des Mikroprozessors verbunden ist, um diesem ein Signal für die eventuelle Feststellung eines Stoppcodes zu liefern, welches die Unterbrechung der Übertragung und die Unterbrechung des entsprechenden Mikroprozessors ($MP_1$) hervorruft.

FIG.1

0 100 712

FIG.2

$D_0$ à $D_7$

$AD_0$  $AD_1$
$AD_2$
$AD_7$

M

DIN  DOUT
$\overline{CE}$
$\overline{WE}$

$AO_3$

$\overline{EDCA}$

C

ET

$OU_1$

$\overline{IOR}$
$\overline{IOW}$
$\overline{ES}$

$IT$

Q

$\overline{S}$  R/S  $\overline{R}$

T

$OU_2$

$\overline{DACK}$

# FIG.3

*Lecture d'une ressource périphérique*

(a)

*Ecriture dans une ressource périphérique*

(b)

# FIG.4

Signaux entre microprocesseur et circuit DMA d'accés
direct à la mémoire

# FIG.5

Programmation d'un code d'arret

Ao = 0 : code d'arret

Ao = 1 : absence de code d'arret

# FIG.6

*Transfert de données d'une ressource périphérique vers une mémoire à travers un circuit DMA*

# FIG.7

*Transfert de données d'une mémoire vers une ressource périphérique à travers un circuit DMA*